(19) Europäisches Patentamt
European Patent Office
Office européen des brevets

(11) **EP 3 772 980 B1**

(12) **EUROPEAN PATENT SPECIFICATION**

(45) Date of publication and mention
of the grant of the patent:
**30.03.2022 Bulletin 2022/13**

(21) Application number: **19707805.8**

(22) Date of filing: **28.02.2019**

(51) International Patent Classification (IPC):
*A23G 9/28* *(2006.01)*

(52) Cooperative Patent Classification (CPC):
**A23G 9/283; A23G 9/28; A23G 9/288**

(86) International application number:
**PCT/EP2019/055066**

(87) International publication number:
**WO 2019/185295 (03.10.2019 Gazette 2019/40)**

(54) **DEVICE FOR DISPENSING FROZEN CONFECTIONS**

VORRICHTUNG ZUR AUSGABE VON EISKONFEKT

DISPOSITIF PERMETTANT DE DISTRIBUER DES CONFISERIES CONGELÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2018 EP 18165172**

(43) Date of publication of application:
**17.02.2021 Bulletin 2021/07**

(73) Proprietor: **Unilever IP Holdings B.V.
3013 AL Rotterdam (NL)**

(72) Inventors:
• **BUTER, René, Joachim
3133 AT Vlaardingen (NL)**

• **DIKS-WARMERDAM, Leonie, Martine
3133 AT Vlaardingen (NL)**
• **KRIEG, Johannes
3133 AT Vlaardingen (NL)**

(74) Representative: **Askew, Sarah Elizabeth
Unilever PLC
Unilever Patent Group
Bronland 14
6708 WH Wageningen (NL)**

(56) References cited:
**EP-A1- 0 995 685        EP-A1- 1 386 542
WO-A1-01/19205        US-A- 2 558 887
US-B1- 6 319 532**

**Description**

**Field of the invention**

The present invention relates to a device for dispensing frozen confections. The invention more particularly relates to such devices which can dispense frozen confections from cartridges.

**Background of the invention**

Devices for dispensing pre-frozen ice cream have been proposed for some time. In particular devices have been proposed for dispensing ice cream from containers containing a pre-portioned amount of ice cream.
EP 1 386 542 A1 discloses a portable dispenser for dispensing ice cream.
US 2006/0213922 discloses a dispenser comprising: a holder for a container, the holder having a receiving opening in which the container is hanging, an outer flange of the container rests on an upper rim of the receiving opening, and a plunger adapted to move in and out and pass through the receiving opening and into the container from above in order to dispense product at the lower end of the container. As the container of US 2006/0213922 is hanging in a receiving opening, the container is said to be designed to be inserted into the receiving opening from above.
EP 0 995 685 A1 discloses a dispensing system for frozen desserts, said dispensing system including a plurality of containers and a dispensing device, each container containing an individual portion of frozen dessert, said container including a substantially cylindrical tube having first and second ends, a nozzle means towards said first end, a piston means located between said nozzle means and said second end, said piston means being adapted for sliding movement along the tube, said individual portion of frozen dessert being contained within the cylindrical tube between said nozzle means and said piston means, said dispensing device including a plunger means mounted for reciprocating movement along a longitudinal axis, a drive means for driving said plunger along said axis, a support means for supporting said first end of said container with said plunger in engagement with said piston means, the arrangement being such that with said container located on said support means, the individual portion of frozen dessert may be dispensed by actuating said drive means.
In the devices of US 2006/0213922 and EP 0 995 685 A1, loading of the container onto or into the dispenser requires inserting/seating the container into or onto the device from above the seating location, i.e. loading occurs in the same direction that the plunger moves when dispensing the frozen confection from the container.
The present inventors have now recognized that there is a need for improvements in devices for dispensing frozen confections from cartridges. In particular, the present inventors have found that there is a need for devices that are less prone to contamination from frozen confection and so are more hygienic and need less cleaning. The inventors have also recognized a need for devices that are more compact and so easier to handle by a vendor and/or easier to site at a dispensing location.
The present inventors have found that by providing a device that allows for engaging with a cartridge in a specific way, one or more of the foregoing needs can be met.

**Summary of the invention**

In a first aspect, the present invention is directed to a device for dispensing a frozen confection from a cartridge, wherein:

- the cartridge comprises:

  • a product compartment containing the frozen confection and having a product outlet,
  • a moveable wall separating the product compartment from a further compartment, wherein the further compartment extends from the product compartment to an entrance end comprising an entrance opening; and

- the device comprises:

  • a plunger moveable into the entrance opening of the cartridge in a dispensing direction to apply a dispensing force to the movable wall and urge the frozen confection out of the product outlet of the product compartment; and
  • a clamp engageable with the entrance end of the cartridge when the entrance end is moved into the clamp in a direction opposite to the dispensing direction.

The device thus allows the cartridge to be engaged by the device by inserting it in a direction opposite to the dispensing direction. This means that there is no need for a clearance between the cartridge seat and the plunger that would otherwise be needed if the cartridge is inserted from the dispensing direction and so allows a more compact device to be constructed. Furthermore, with such an arrangement, the product outlet can be kept clear of the device during the whole operation of engaging the cartridge, dispensing the confection and then disengaging the cartridge, thus greatly reducing the possibility of frozen confection at the product outlet being deposited on the device.

In preferred embodiment the device comprises a casing into which the plunger is retractable and with the cartridge engaged in the clamp, the cartridge projects out from the casing. Such an arrangement keeps the moving parts of the dispenser safely within the casing whilst ensuring that the cartridge (and especially the product outlet thereof) has minimal contact with the device. More preferably the product outlet is spaced away from the casing by a distance of greater than 30 mm, even more preferably at least 40 mm and most preferably from 50 to 150 mm.

To provide maximum support to the cartridge against the dispensing force and so hold it in place during dispensing it is preferred that the clamp surrounds at least 40% of the circumference of the entrance end, more preferably at least 50%. In a preferred embodiment the clamp substantially surrounds the entrance end when the entrance end is engaged therein. More preferably the clamp completely surrounds the entrance end when the entrance end is engaged therein

Typically, frozen confections will be discharged from a cartridge in a downwards direction, for example into a receptacle such as a cup or cone. Thus the dispensing direction is preferably downwards and the direction opposite to the dispensing direction is upwards.

To minimise the contact of the cartridge with the device and so minimise the risk of contamination of the device with frozen confection, it is preferred that the clamp is the sole means of supporting the cartridge against the dispensing force.

To aid inserting the cartridge into the device it is preferred that the surface of the clamp facing the cartridge during insertion is shaped in a certain way. In particular, it is preferred that a surface of the clamp facing in the dispensing direction is chamfered to guide the entrance end of the cartridge into engagement with the clamp. For example, where the dispensing direction is downwards, the lower surface of the clamp is preferably chamfered.

The cartridges preferably comprise a cylindrical outer wall and a piston slideable within the outer wall and forming the moveable wall.

In a preferred embodiment the entrance end of the cartridge comprises a flange at least partially surrounding the entrance opening and the clamp of the device is engageable with the flange. Where the cartridge comprises an outer cylindrical wall, the flange preferably extends radially outward from the cylindrical wall.

Each cartridge preferably holds a single dose of frozen confection. More preferably the amount of frozen confection in each cartridge is from 50 to 200 g, more preferably still from 60 to 175 g and most preferably from 70 to 150 g.

The device of the present invention may be used for dispensing of a range of frozen confections. To aid discharging the confection from a cartridge, however, it is preferred that the frozen confection within the cartridge is formulated to be soft and yet stable at a range of temperatures encountered in storage freezers. In particular, it is preferred that the frozen confection comprises freezing point depressants in an amount of from 25 to 35% by weight of the frozen confection, wherein the number average molecular weight $<M>_n$ of the freezing point depressants is less than 250 g mol$^{-1}$. More preferably the number average molecular weight $<M>_n$ of the freezing point depressants is no less than 205 g mol$^{-1}$.

For the purposes of the present invention, the average molecular weight for a mixture of freezing point depressants is defined by the number average molecular weight $<M>_n$ (Equation1). Where $w_i$ is the mass of species i, $M_i$ is the molar mass of species i and $N_i$ is the number of moles of species i of molar mass $M_i$.

$$<M>_n = \frac{\sum w_i}{\sum (w_i/M_i)} = \frac{\sum N_i M_i}{\sum N_i}$$

(Equation 1)

Freezing point depressants as defined in this invention consist in:

- monosaccharides and disaccharides
- oligosaccharides containing from three to ten monosaccharide units joined in glycosidic linkage.
- corn syrups with a dextrose equivalent (DE) of greater than 20, preferably greater than 40 and more preferably greater than 60. Corn syrups are complex multicomponent sugar mixtures and the dextrose equivalent is a common industrial means of classification. Since they are complex mixtures their number average molecular weight $<M>_n$ can be calculated from Equation 2 below. (Journal of Food Engineering (1997) 33: 221-226)

$$DE = \frac{18016}{<M>_n}$$

(Equation 2)

- erythritol, arabitol, glycerol, xylitol, sorbitol, mannitol, lactitol and malitol.
- ethanol.

Especially preferred frozen confections are disclosed in WO 2017/133863 A1.

The frozen confection is typically made by freezing a mix (more preferably a pasteurized mix) of ingredients such as water, fat, freezing point depressants, protein (normally milk proteins), and optionally other ingredients such as emulsifiers, stabilisers, colours and flavours. Frozen confections include ice cream, gelato, frozen yoghurt, sorbets, granitas, shaved ices and the like. Preferably the frozen confection is ice cream.

The frozen confection is preferably aerated. By "aerated" is meant that the confection has an overrun of at least 30%. More preferably the frozen aerated confection has an overrun of from 70 to 135%, most preferably from 80 to 110%.

Overrun (OR) is defined by the following Equation 3

$$OR = \frac{volume..of..frozen..confection - volume..of..premix..at..ambient..temp}{volume..of..premix..at..ambient..temp} \times 100$$

(Equation 3)

It is measured at atmospheric pressure. Ambient temperature is 20°C.

The device of the present invention may be used in a variety of dispensers and systems.

In one embodiment the device is preferably is self-standing. For example, the device could be mounted on a stand suitable for placing on a counter-top or other surface.

In another embodiment the device is adapted to be mounted on the front of a person. This embodiment is particularly preferred where the device is part of a portable dispenser comprising the device and a thermally insulated container for storing the cartridges and being adapted to be mounted on the back of a person.

Mounting the device on the torso of the person removes the need to hold the device during actuation and so leaves both hands of the person free for other activities. Furthermore, such mounting provides the opportunity for the actuator for the dispensing process to be accessible to a customer who can themselves start the dispensing process and thus become more engaged in the process.

Thus the device preferably comprises an actuator for activating the device, the actuator being disposed on a surface of the device facing away from the person on which the device is mounted, more preferably the actuator is disposed on a front surface of the device. More preferably still the actuator is a button and the device is activated by a single press of the button. By "single press" is meant that by simply depressing and then immediately releasing the button the whole dispensing process to effected without having to hold the button during the dispensing process.

Preferably the dispenser is self-contained so that the container and device do not need to be separately mounted on the person. For example, the dispenser preferably comprises a device support extending from the thermally insulated container to the device. More preferably the support is adapted to pass over one or both shoulders of the person on who's back the container is mounted.

If the device becomes too bulky, the freedom of the person to move their hands in front of them becomes limited. To limit the size of the device it is preferred that any power source (such as a battery pack if the device is electrically powered) is located on, in or at least adjacent to the container. Thus it is preferred that the device is powered by a power source located in the container and a conduit for conveying power (e.g. a power cable for electrical power) extends from the source to the device. To protect the conduit, it is especially preferred to mount the conduit on or in the device support.

In a further aspect, the present invention provides a method for dispensing a frozen confection, the method comprising the steps of:

(a) providing a cartridge and device as claimed in any embodiment of the first aspect;
(b) urging the cartridge in the direction opposite to the dispensing direction until the clamp engages the entrance end of the cartridge; and
(c) moving the plunger in the dispensing direction to apply a dispensing force to the movable wall and urge the frozen confection out of the product outlet of the product compartment.

Except in the Examples, all numbers in this description indicating amounts of material, time periods, length scales, conditions of reaction, physical properties of materials and/or use may optionally be understood as modified by the word "about".

It should be noted that in specifying any range of values, any particular upper value can be associated with any particular lower value.

For the avoidance of doubt, the word "comprising" is intended to mean "including" but not necessarily "consisting of" or "composed of". In other words, the listed steps or options need not be exhaustive.

The disclosure of the invention as found herein is to be considered to cover all embodiments as found in the claims as being multiply dependent upon each other irrespective of the fact that claims may be found without multiple dependency or redundancy.

Where a feature is disclosed with respect to a particular aspect of the invention such disclosure is also to be considered to apply to any other aspect of the invention *mutatis mutandis.*

## Brief description of the drawings

The present invention will now be described with reference to the figures, wherein:

Figure 1a shows a front view of an embodiment of the device of the invention with a cartridge in place for dispensing.
Figure 1b shows a back view of the device and cartridge of Figure 1a.
Figure 1c shows a side view of the device and cartridge of Figure 1a.
Figure 1d shows a sectional view of the device of Figure 1c, taken through a plane containing line A-A.
Figure 2a shows a sectional side view of part of the device and cartridge of Figure 1a with the cartridge clamped in the device.
Figure 2b shows the same view as Figure 2a but with the clamp disengaged from the cartridge.
Figure 2c shows a perspective view from above and one side and partly in section of the clamp and cartridge of Figure 2a.
Figure 2d shows a perspective view from above and one side and partly in section of the clamp and cartridge of Figure 2b.
Figure 3 shows a side view of an embodiment of a self-standing device of the invention.
Figure 4 shows a schematic side view of an embodiment of a dispenser of the invention mounted on a person.
Figure 5 shows a side view of the dispenser of Figure 1 before being mounted on the person.

## Detailed description

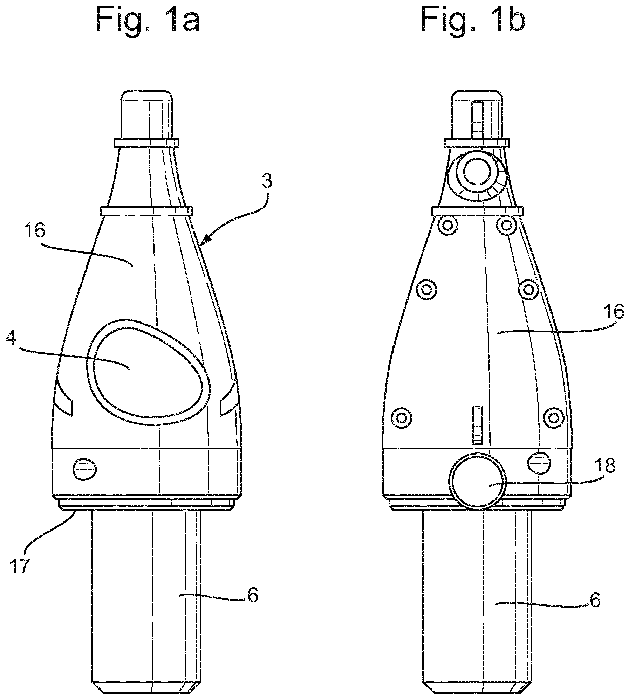

An embodiment of a device (3) is shown in Figures 1a to 1d. The device (3) comprises a casing (16) which is roughly in the shape of a truncated cone and at its larger, bottom end has an opening (17) shaped to receive the top end of a cartridge (6). On the front of the device is a button (4) for actuating the discharge of confection from the cartridge (6) and on the back of the device is a release button (18) for actuating a mechanism for releasing a used cartridge (6) from the device (3).

In the embodiment shown, the cartridge (6) is of the piston-type and thus has an outer cylindrical wall (25) in which slides a piston (24). In a filled state, below the piston (24) is a product compartment (26) filled with frozen confection and extending to a bottom end of the cartridge (6) in which is located an orifice (27) which serves as the product outlet. Above the piston (24) at the top end of the cartridge (6) is an entrance opening (28) through which a plunger (23) of the device (3) can be moved to apply a dispensing force on the piston (24) through which the force is transmitted to frozen confection in the product compartment (26) to urge the confection through the product outlet (27).

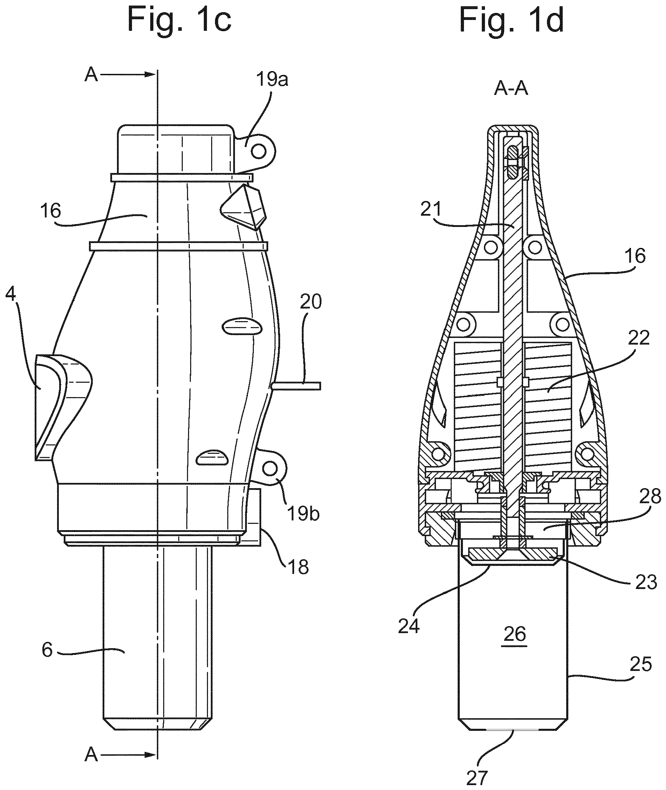

Within the device casing (16) are a drive motor (22) and a shaft (21). The shaft (21) is fixedly connected at its bottom end to the plunger (23) and passes through the motor in an arrangement that allows the motor (22) to translate the shaft (21) and therefore the plunger (23) in a linear downwards or upwards direction. When the plunger (23) is in a starting position, before discharge, substantially all of the shaft (21) and plunger (23) are withdrawn into the casing (16). In the embodiment shown in Figure 1c, part of a power cable (20) for the motor is shown exiting the casing (16) to connect with an external power source (not shown in Figure 1).

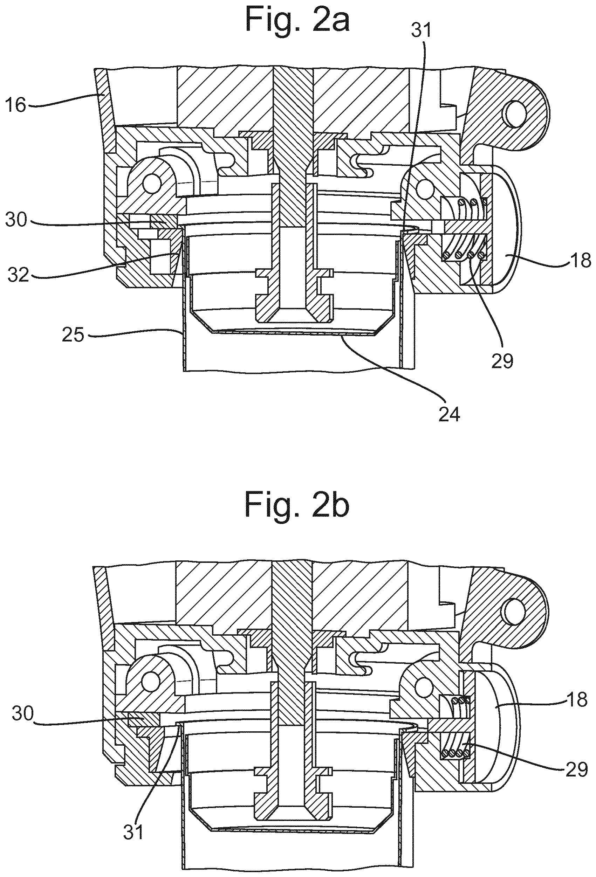

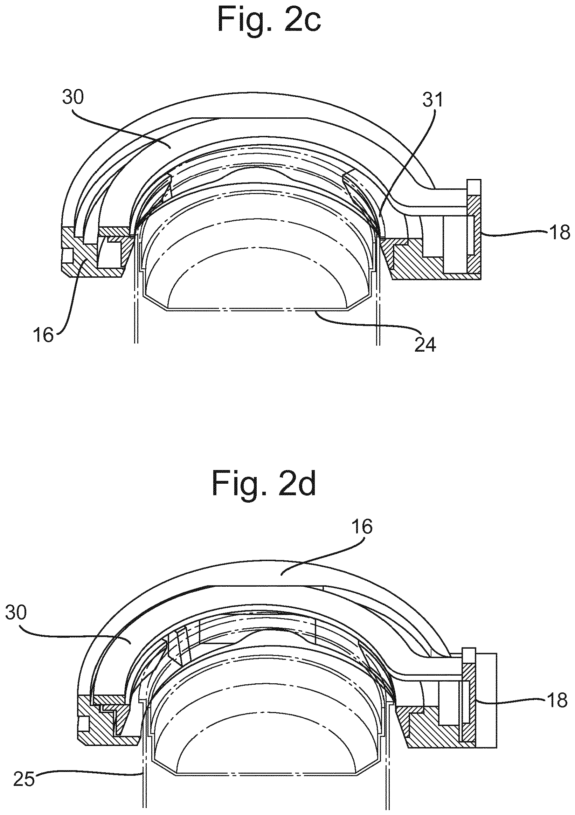

Figures 2a to 2d show details of the mechanism used to engage and hold the cartridge in the device of Figure 1. Located inside the casing (16) and proximal and concentric with the opening (17) is an annular clamp member (30). At one side, the clamp member (30) is integrally formed with the release button (18). The release button (18) is slideable in a lateral direction such that when pressed, the button (18) and clamp (30) slide together in the lateral direction (i.e. slide to the left in the view shown in Figure 2). A resiliently biasable member (29), such as a spring, is located adjacent to the release button (18) and is compressed when the button is pressed (as shown in Figure 2b). For clarity, the spring (29) is omitted from Figures 2c and 2d.

Figures 2a and 2c show the situation where the cartridge (6) is engaged in the clamp (30), which will hereafter be referred to as the "locked configuration". In the locked configuration, the force of the spring (29) against the release button (18) pulls the clamp (30) into its most constricted position, that is where the left side of the clamp (30) is the furthest towards the centre of the opening (17). In this locked configuration, the annular space within the clamp (30) is marginally smaller than the diameter of the cylindrical wall (25) of the cartridge (6). Thus the clamp (30) slightly compresses and firmly grips the side of the cartridge wall (25) around at least part of the entrance opening (28). Conveniently, the cartridge (6) comprises an annular flange (31) projecting out around the entrance opening (28) which provides further resistance to the cartridge being removed from the engaged clamp (30).

Figures 2b and 2d show the situation where the cartridge (6) is disengaged from the clamp (30), which will hereafter be referred to as the "open configuration". In the open configuration, the release button (18) is held pressed by a user such that the clamp (30) is translated to its least constricted position, that is where the left side (in Figure 2) of the clamp (30) is the furthest outwards from the centre of the opening (17). In this open configuration, the annular space within the clamp (30) is made larger than the diameter of the cylindrical wall (25) of the cartridge (6) and even than the diameter of the flange (31). Thus the clamp (30) no longer grips the side of the cartridge wall (25) and the cartridge (6) can be moved downwards and out of the device (3).

A cartridge (6) may be inserted into the device (3) by positioning the entrance opening (28) of the cartridge (6) below the opening (17) of the casing (16) and pushing the cartridge (6) upwards. On moving upwards, the flange (31) (or top end of the cartridge wall (25) if the cartridge does not comprise a flange) contacts the lower surface (32) of the clamp (30). The lower surface (32) of the clamp member (30) is chamfered such that the surface flairs outward in a downwards direction. As the flange (31) is moved upwards along the chamfer (32), the clamp (30) is forced to the left into a less and less constricted configuration until the flange (31) is pushed above the top of the chamfer (32) and the clamp (30) is pulled back to the locked configuration by the force of the spring (29).

Thus a cartridge (6) can be secured in the device (3) by inserting the top end (28) of the cartridge (6) into the bottom opening (17) of the device. As such, during the whole operation of the device the product outlet (27) remains away from the device (3) and so contamination of the device (3) with frozen confection can be avoided.

Furthermore, owing to the afore-described insertion mechanism, there is no need for the plunger (23) to be withdrawn above the clamp (30) and so the device (3) can be constructed to be very compact.

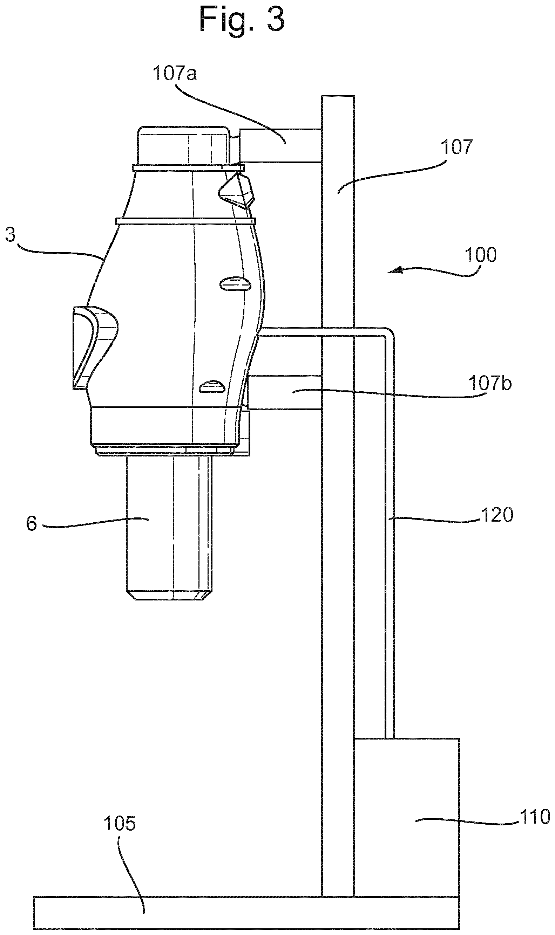

Figure 3 illustrates a device (3) of the invention mounted on a stand (100). The stand (100) comprises a vertical stanchion (107) from which project a pair of brackets (107a, 107b). The brackets (107a and 107b) are joined to corresponding connectors (19a, 19b - see Figure 1c) at the back of the casing (16) of the device (3). The stanchion (107) extends upward from a stand base (105) on which the whole dispenser rests. A power cable (120) is shown extending from the device (3) to a battery pack (110) located on the stand base (105) but the power cable (120) could equally extend to a mains power supply.

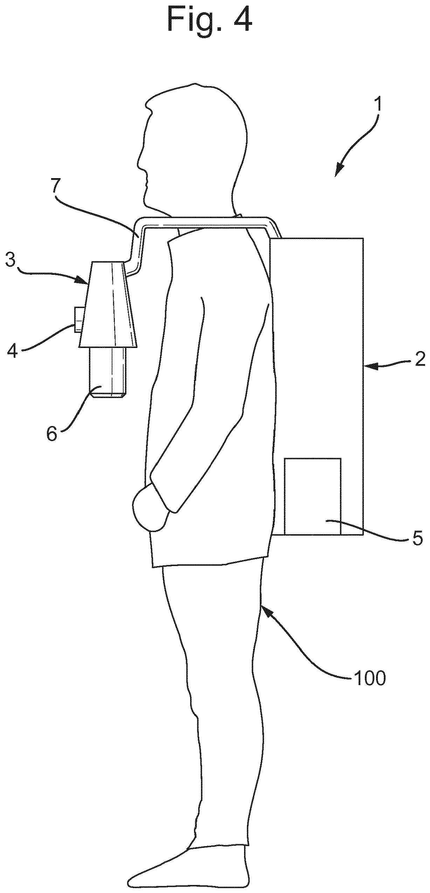

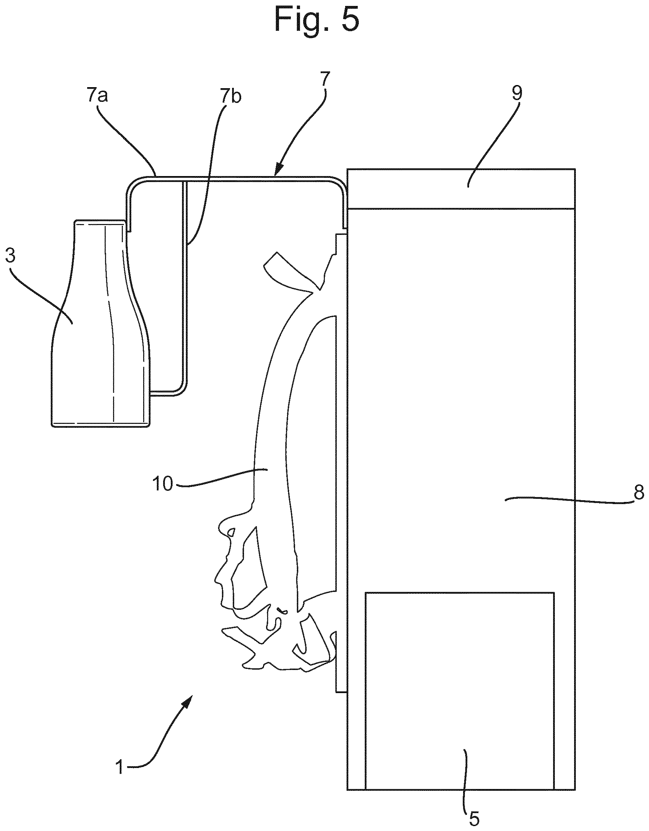

Figures 4 and 5 show a portable dispenser (1) mounted on a person (100). The dispenser comprises a container in the form of a backpack (2) and a device (3) according to an embodiment of the invention.

The backpack (2) is mounted on the back of the person (100) by means of a harness (10) which for clarity is omitted from Figure 4 but is shown in Figure 5. The backpack (2) comprises a main container body (8) comprising side walls and a base, and a lid (9). The container body (8) and lid (9) are made from thermally-insulating material such as polyurethane foam sandwiched between plastic sheets. Near the base of the container body (8) and located on opposite sides thereof are two delivery ports (5). The lid (9) can be removable from the container body (8) or is at least openable (e.g. in a hinged or similar manner) in order to allow access to the interior of the container (2) to install or remove a plurality of single-dose cartridges therefrom.

The container (2) preferably holds at least 10 cartridges, more preferably at least 20 and most preferably from 25 to 50.

The discharge device (3) is suspended in front of the torso of the sales person (100) by means of a rigid support frame (7) which extends from the backpack (2) over the left shoulder of the person (100). The support may have one or more branches (7a, 7b) on which the device (3) is suspended and which join with the corresponding connectors (19a, 19b) on the device (3).

The battery (not shown) for powering the motor (22) is located in the backpack (2). Conveniently the path of the power cable (20 - see Fig. 1c) between the device (3) and the backpack (2) follows that of the support frame (7) for example by threading the cable (2) inside the frame (7) or fixing it to an outer surface of the frame (7).

In use, the sales person (100) loads the container (2) with pre-frozen cartridges (6) of frozen confection. The seller (100) then puts the backpack (2) on as shown in Figure 4 with the support (7) extending over the seller's shoulder to suspend the device (3) in front of the seller's torso. The whole dispenser (1) is secured it in place with the harness (10).

The seller (100) then strolls to a location where potential consumers are located. On encountering a consumer wishing to buy a portion of frozen confection, the seller (100) opens one of the ports (5) and takes a cartridge (6). The seller (100) then installs the taken cartridge (6) in the device (3) by inserting it from underneath the device (3) as described above. The seller (100) holds a receptacle (such as a cup or wafer cone) below the product outlet (27) and tells the consumer to push the discharge actuating button (4) whilst the seller (100) closes the port (5) with the seller's free hand.

On pushing the button (4) the motor (22) is activated and actuates the shaft (21) downwards thus translating the plunger (23) further into the cartridge (6) and discharging the frozen confection into the receptacle. Meanwhile the seller (100) can use the free hand to process payment from the consumer.

When the contents of the cartridge (6) have been discharged into the receptacle, the seller (100) hands the filled receptacle to the consumer. Simultaneously the motor (22) reverses the direction of motion of the shaft (21), withdrawing the shaft (21) and plunger (23) into the casing. The seller then presses the cartridge release button (18) and removes the empty cartridge from the device (3) ready for insertion of a full cartridge (6) into the opening (17) at the bottom of the casing (16).

**Claims**

1. A device for dispensing a frozen confection from a cartridge, wherein:

   - the cartridge (6) comprises:

      • a product compartment (26) containing the frozen confection and having a product outlet (27),
      • a moveable wall (24) separating the product compartment (26) from a further compartment, wherein the further compartment extends from the product compartment (26) to an entrance end comprising an entrance opening (28); and

   - the device (3) comprises:

      • a plunger (23) moveable into the entrance opening (28) of the cartridge (6) in a dispensing direction to apply a dispensing force to the movable wall (24) and urge the frozen confection out of the product outlet (27) of the product compartment (26); and
      • a clamp (30) engageable with the entrance end of the cartridge (6) when the entrance end is moved into the clamp (30) in a direction opposite to the dispensing direction.

2. The device as claimed in claim 1 wherein the device (3) comprises a casing (16) into which the plunger (23) is retractable and with the cartridge (6) engaged in the clamp (30), the cartridge (6) projects out from the casing (16).

3. The device as claimed in claim 2 wherein the product outlet (27) is spaced away from the casing (16) by a distance of greater than 30 mm.

4. The device as claimed in any one of the preceding claims wherein the clamp (30) surrounds at least 40% of the circumference of the entrance end when the entrance end is engaged therein.

5. The device as claimed in any one of the preceding claims wherein the dispensing direction is vertically downwards and the direction opposite to the dispensing direction is vertically upwards.

6. The device as claimed in any one of the preceding claims wherein the clamp (30) is the sole means of supporting the cartridge (6) against the dispensing force.

7. The device as claimed in any one of the preceding claims wherein a surface of the clamp (30) facing in the dispensing direction is chamfered to guide the entrance end of the cartridge (6) into engagement with the clamp (30).

8. The device as claimed in any one of the preceding claims wherein the entrance end comprises a flange (31) at least partially surrounding the entrance opening (28) and the clamp (30) is engageable with the flange (31).

9. The device as claimed in claim 8 wherein the cartridge (6) comprises an outer cylindrical wall (25) extending from the entrance end to an outlet end comprising the product outlet (27) and the flange (31) extends radially outward from the wall (25).

10. The device as claimed in any one of the preceding claims wherein the device (3) is adapted to be mounted on the front of a person.

11. The device as claimed in any one of the claims 1 to 9 wherein the device (3) is self-standing.

12. A method for dispensing a frozen confection, the method comprising the steps of:

(a) providing cartridge (6) and device (3) as claimed in any one of the preceding claims;
(b) urging the cartridge (6) in the direction opposite to the dispensing direction until the clamp (30) engages the entrance end of the cartridge (6); and
(c) moving the plunger (23) in the dispensing direction to apply a dispensing force to the movable wall (24) and urge the frozen confection out of the product outlet (27) of the product compartment (26).

**Patentansprüche**

1. Vorrichtung zum Ausgeben von gefrorenem Konfekt aus einer Patrone, wobei:

- die Patrone (6) Folgendes umfasst:

• ein Produktfach (26), das das gefrorene Konfekt enthält und einen Produktauslass (27) hat,
• eine bewegliche Wand (24), die das Produktfach (26) von einem weiteren Fach trennt, wobei sich das weitere Fach vom Produktfach (26) zu einem Eingang erstreckt und eine Eingangsöffnung (28) umfasst; und

- die Vorrichtung (3) Folgendes umfasst:

• einen Stempel (23), der in der Eingangsöffnung (28) der Patrone (6) in einer Ausgaberichtung bewegt werden kann, um eine Ausgabekraft auf die bewegliche Wand (24) aufzubringen und das gefrorene Konfekt aus dem Produktauslass (27) des Produktfachs (26) zu drängen; und
• eine Klemme (30), die mit dem Eingangsende der Patrone (6) in Eingriff gelangt, wenn das Eingangsende in einer Richtung entgegengesetzt zur Ausgaberichtung in die Klemme (30) bewegt wird.

2. Vorrichtung nach Anspruch 1, wobei die Vorrichtung (3) ein Gehäuse (16) umfasst, in das der Stempel (23) zurückgezogen werden kann, und wobei dann, wenn die Patrone (6) mit der Klemme (30) in Eingriff ist, die Patrone (6) aus dem Gehäuse (16) vorsteht.

3. Vorrichtung nach Anspruch 2, wobei der Produktauslass (27) vom Gehäuse (16) mit einem Abstand von mehr als 30 mm beabstandet ist.

4. Vorrichtung nach einem der vorhergehenden Ansprüche, wobei die Klemme (30) wenigstens 40 % des Umfangs des Eingangsendes umgibt, wenn das Eingangsende mit ihr in Eingriff ist.

5. Vorrichtung nach einem der vorhergehenden Ansprüche, wobei die Ausgaberichtung vertikal abwärts orientiert ist und die Richtung entgegengesetzt zur Ausgaberichtung vertikal aufwärts orientiert ist.

6. Vorrichtung nach einem der vorhergehenden Ansprüche, wobei die Klemme (30) das einzige Mittel ist, um die Patrone (6) gegen die Ausgabekraft zu halten.

7. Vorrichtung nach einem der vorhergehenden Ansprüche, wobei eine Fläche der Klemme (30), die in die Ausgaberichtung zeigt, abgeschrägt ist, um das Eingangsende der Patrone (6) in Eingriff mit der Klemme (30) zu führen.

8. Vorrichtung nach einem der vorhergehenden Ansprüche, wobei das Eingangsende einen Flansch (31) aufweist, der die Eingangsöffnung (28) wenigstens teilweise umgibt, und wobei die Klemme (30) mit dem Flansch (31) in Eingriff gelangen kann.

9. Vorrichtung nach Anspruch 8, wobei die Patrone (6) eine zylindrische Außenwand (25) aufweist, die sich vom Eingangsende bis zu einem Ausgabeende, das den Produktauslass (27) enthält, erstreckt, und wobei sich der Flansch (31) von der Wand (25) radial nach außen erstreckt.

10. Vorrichtung nach einem der vorhergehenden Ansprüche, wobei die Vorrichtung (3) so ausgelegt ist, dass sie an der Vorderseite einer Person befestigt werden kann.

11. Vorrichtung nach einem der Ansprüche 1 bis 9, wobei die Vorrichtung (3) selbststehend ist.

**12.** Verfahren zum Ausgeben von gefrorenem Konfekt, wobei das Verfahren die folgenden Schritte umfasst:

(a) Bereitstellen einer Patrone (6) und einer Vorrichtung (3) nach einem der vorhergehenden Ansprüche;
(b) Drängen der Patrone (6) in der Richtung entgegengesetzt zur Ausgaberichtung, bis die Klemme (30) mit dem Eingangsende der Patrone (6) in Eingriff gelangt; und
(c) Bewegen des Stempels (23) in der Ausgaberichtung, um eine Ausgabekraft auf die bewegliche Wand (24) auszuüben und das gefrorene Konfekt aus dem Produktauslass (27) des Produktfachs (26) zu drängen.

**Revendications**

**1.** Dispositif pour distribuer une confiserie congelée à partir d'une cartouche, dans lequel :

- la cartouche (6) comprend :

• un compartiment de produit (26) contenant la confiserie congelée et ayant une sortie de produit (27),
• une paroi déplaçable (24) séparant le compartiment de produit (26) d'un autre compartiment, dans lequel l'autre compartiment s'étend à partir du compartiment de produit (26) jusqu'à une extrémité d'entrée comprenant une ouverture d'entrée (28) ; et

- le dispositif (3) comprend :

• un piston (23) déplaçable dans l'ouverture d'entrée (28) de la cartouche (6) dans une direction de distribution pour appliquer une force de distribution à la paroi déplaçable (24) et pousser la confiserie congelée à l'extérieur de la sortie de produit (27) du compartiment de produit (26) ; et
• un serre-joint (30) pouvant être enclenché avec l'extrémité d'entrée de la cartouche (6) lorsque l'extrémité d'entrée est déplacée dans le serre-joint (30) dans une direction opposée à la direction de distribution.

**2.** Dispositif selon la revendication 1, dans lequel le dispositif (3) comprend un boîtier (16) dans lequel le piston (23) peut être rétracté et avec la cartouche (6) enclenché dans le serre-joint (30), la cartouche (6) fait saillie à l'extérieur du boîtier (16).

**3.** Dispositif selon la revendication 2, dans lequel la sortie de produit (27) est espacée du boîtier (16) d'une distance supérieure à 30 mm.

**4.** Dispositif selon l'une quelconque des revendications précédentes, dans lequel le serre-joint (30) entoure au moins 40 % de la circonférence de l'extrémité d'entrée lorsque l'extrémité d'entrée est enclenchée dans celui-ci.

**5.** Dispositif selon l'une quelconque des revendications précédentes, dans lequel la direction de distribution est verticalement vers le bas et la direction opposée à la direction de distribution est verticalement vers le haut.

**6.** Dispositif selon l'une quelconque des revendications précédentes, dans lequel le serre-joint (30) est le seul moyen pour supporter la cartouche (6) contre la force de distribution.

**7.** Dispositif selon l'une quelconque des revendications précédentes, dans lequel une surface du serre-joint (30) orientée dans la direction de distribution est chanfreinée pour guider l'extrémité d'entrée de la cartouche (6) dans un enclenchement avec le serre-joint (30).

**8.** Dispositif selon l'une quelconque des revendications précédentes, dans lequel l'extrémité d'entrée comprend une bride (31) entourant au moins partiellement l'ouverture d'entrée (28) et le serre-joint (30) peut être enclenché avec la bride (31).

**9.** Dispositif selon la revendication 8, dans lequel la cartouche (6) comprend une paroi cylindrique externe (25) s'étendant à partir de l'extrémité d'entrée jusqu'à une extrémité de sortie comprenant la sortie de produit (27) et la bride (31) s'étend radialement vers l'extérieur à partir de la paroi (25).

**10.** Dispositif selon l'une quelconque des revendications précédentes, dans lequel le dispositif (3) est adapté pour être monté sur l'avant d'une personne.

**11.** Dispositif selon l'une quelconque des revendications 1 à 9, dans lequel le dispositif (3) est autonome.

**12.** Procédé pour la distribution d'une confiserie glacée, le procédé comprenant les étapes de :

(a) fourniture de cartouche (6) et dispositif (3) selon l'une quelconque des revendications précédentes ;
(b) poussée de la cartouche (6) dans la direction opposée à la direction de distribution jusqu'à ce que le serre-joint (30) s'enclenche dans l'extrémité d'entrée de la cartouche (6) ; et
(c) déplacement du piston (23) dans la direction de distribution pour appliquer une force de distribution à la paroi déplaçable (24) et pousser la confiserie glacée à l'extérieur de la sortie de produit (27) du compartiment de produit (26).

## Fig. 1a

## Fig. 1b

# Fig. 1c

# Fig. 1d

# Fig. 2a

# Fig. 2b

# Fig. 2c

# Fig. 2d

# Fig. 3

# Fig. 4

# Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1386542 A1
- US 20060213922 A
- EP 0995685 A1
- WO 2017133863 A1

**Non-patent literature cited in the description**

- *Journal of Food Engineering,* 1997, vol. 33, 221-226